(19)

Europäisches
Patentamt
European
Patent Office
Office européen
des brevets

(11)  **EP 4 053 764 A1**

(12)  **EUROPEAN PATENT APPLICATION**
published in accordance with Art. 153(4) EPC

(43) Date of publication:
07.09.2022  Bulletin 2022/36

(21) Application number: 20882076.1

(22) Date of filing: 30.10.2020

(51) International Patent Classification (IPC):
*G06Q 10/06* (2012.01)        *G06Q 50/04* (2012.01)
*G06F 17/18* (2006.01)

(52) Cooperative Patent Classification (CPC):
**G06F 17/18; G06Q 10/06; G06Q 50/04;** Y02P 90/30

(86) International application number:
**PCT/JP2020/040767**

(87) International publication number:
**WO 2021/085585 (06.05.2021 Gazette 2021/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  01.11.2019  JP 2019199613

(71) Applicant: NEC Corporation
**108-8001 Tokyo (JP)**

(72) Inventors:
• **SEO Ryutaro**
  **Tokyo 108-8001 (JP)**
• **OHISHI Kazuto**
  **Tokyo 108-8001 (JP)**
• **KOMIYAMA Yuki**
  **Tokyo 108-8001 (JP)**

(74) Representative: **Vossius & Partner
Patentanwälte Rechtsanwälte mbB
Siebertstraße 3
81675 München (DE)**

(54)   **ANALYZING DEVICE, CONTROL METHOD, AND PROGRAM**

(57)    An analyzing apparatus (2000) acquires a target data set (10) and division number information (30). The target data set (10) is a set of target data (20) each indicating a pair of factor data (22) and result data (24). The division number information (30) indicates a division number being a number for dividing a numerical range of the factor data (22). The analyzing apparatus (2000) computes a plurality of boundary values for dividing the numerical range of the factor data (22) into a range of the division number. Further, the analyzing apparatus (2000) computes, for each boundary value, a test statistical quantity representing a difference relating to the result data (24) for two samples to be acquired by dividing the target data set (10) into two parts at the boundary value. Then, the analyzing apparatus (2000) generates test statistical quantity information (40) indicating a plurality of test statistical quantities computed for the each boundary value.

FIG. 1

**Description**

TECHNICAL FIELD

The present invention relates to a data analysis.

BACKGROUND ART

A system for analyzing a business content of a company has been developed. For example, PTL 1 discloses an apparatus for determining presence or absence of an anomaly in a product by a test. More specifically, the apparatus in PTL 1 determines presence or absence of an anomaly by performing a test of comparing a target value with an actual value for a variable representing a final quality characteristic of a product. Then, in a case where a final quality characteristic includes an anomaly, the apparatus in PTL 1 determines presence or absence of an anomaly by performing a test of comparing a target value with an actual value also for another variable associated with the final quality characteristic.

RELATED DOCUMENT

-PATENT DOCUMENT

[PTL 1] Japanese Patent Application Publication No. 2019-36061

SUMMARY OF THE INVENTION

TECHNICAL PROBLEM

PTL 1 has a premise that a target value representing a value of an appropriate variable is known in advance. Therefore, the apparatus in PTL 1 may not be used for determining a target value of a variable.
The present invention has been made in view of the above issue, one of objects of the present invention is to provide a technique for facilitating recognition of an appropriate value for a factor that may affect a result.

SOLUTION TO PROBLEM

An analyzing apparatus according to the present invention includes 1) an acquisition unit that acquires a set of target data each indicating a pair of factor data being a value relating to a factor, and result data being a value relating to a result, and division number information indicating a number for dividing a numerical range of the factor data, 2) a computation unit that computes, for each of a plurality of boundary values for dividing the numerical range into the number, a test statistical quantity representing a difference relating to the result data for two samples to be acquired by dividing target data included in the set of the target data into two parts at the boundary value, and 3) a generation unit that generates test statistical quantity information indicating a plurality of test statistical quantities computed for the each boundary value.
A control method according to the present invention is executed by a computer. The control method includes 1) an acquisition unit that acquires a set of target data each indicating a pair of factor data being a value relating to a factor, and result data being a value relating to a result, and division number information indicating a number for dividing a numerical range of the factor data, 2) a computation unit that computes, for each of a plurality of boundary values for dividing the numerical range into the number, a test statistical quantity representing a difference relating to the result data for two samples to be acquired by dividing target data included in the set of the target data into two parts at the boundary value, and 3) a generation unit that generates test statistical quantity information indicating a plurality of test statistical quantities computed for the each boundary value.
A program according to the present invention causes a computer to execute the control method according to the present invention.

ADVANTAGEOUS EFFECTS OF INVENTION

A technique for facilitating recognition of an appropriate value for a factor that may affect a result is provided.

BRIEF DESCRIPTION OF THE DRAWINGS

[Fig. 1] Fig. 1 is a diagram illustrating an overview of an analyzing apparatus according to a present example embodiment.

[Fig. 2] Fig. 2 is a diagram conceptually illustrating processing of computing a test statistical quantity for each sample pair.

[Fig. 3] Fig. 3 is a diagram illustrating a functional configuration of an analyzing apparatus according to an example embodiment 1.

[Fig. 4] Fig. 4 is a diagram illustrating a computer for achieving the analyzing apparatus.

[Fig. 5] Fig. 5 is a diagram illustrating a usage environment of the analyzing apparatus.

[Fig. 6] Fig. 6 is a flowchart illustrating a flow of processing to be performed by the analyzing apparatus according to the example embodiment 1.

[Fig. 7] Fig. 7 is a diagram illustrating test statistical quantity information to be achieved as a table.

[Fig. 8] Fig. 8 is a diagram illustrating test statistical quantity information to be achieved as a test statistical quantity graph.

[Fig. 9] Fig. 9 is a diagram illustrating a screen to be provided to a user.

[Fig. 10] Fig. 10 is a diagram illustrating a screen including a histogram and test statistical quantity information.

[Fig. 11] Fig. 11 is a diagram illustrating a screen including a time series graph, a histogram, and a test statistical quantity graph.

[Fig. 12] Fig. 12 is a diagram illustrating a first sample and a second sample in an analyzing apparatus 2000 according to a modification example.

[Fig. 13] Fig. 13 is a diagram illustrating another method of dividing a target data set 10 into two samples by using a pair of two boundary values.

[Fig. 14] Fig. 14 is a diagram illustrating information to be output by the analyzing apparatus 2000 according to the modification example.

DESCRIPTION OF EMBODIMENTS

Hereinafter, an example embodiment according to the present invention is described by using the drawings. Note that, in all the drawings, a similar constituent element is indicated by a similar reference sign, and description thereof is omitted as necessary. Further, in each block diagram, each block represents a configuration of a functional unit instead of a configuration of a hardware unit unless otherwise specifically described.

[Example Embodiment 1]

<Overview>

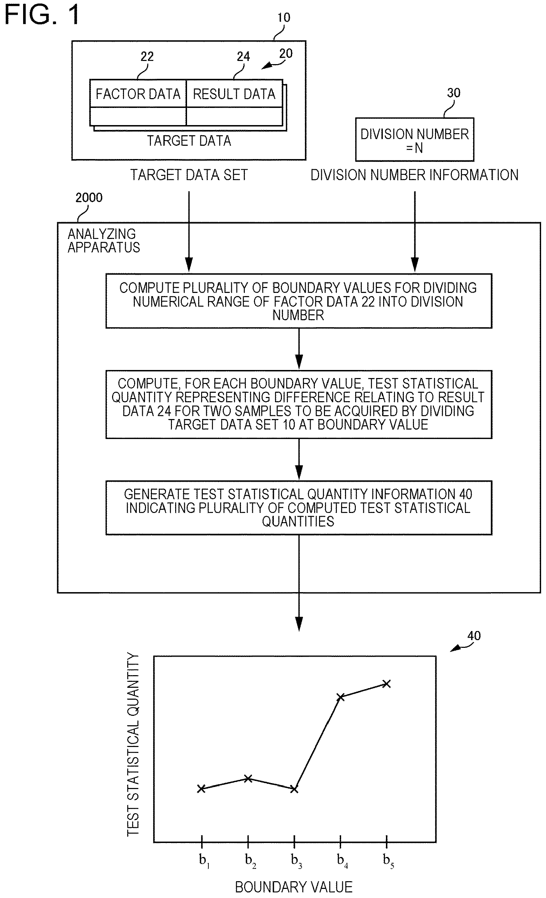

Fig. 1 is a diagram illustrating an overview of an analyzing apparatus 2000 according to a present example embodiment. Note that, Fig. 1 is an illustration for facilitating understanding of the analyzing apparatus 2000, and a function of the analyzing apparatus 2000 is not limited to the one illustrated in Fig. 1.

The analyzing apparatus 2000 acquires a target data set 10, which is a set of a plurality of pieces of target data 20. The target data 20 are data in which a value of a factor (factor data 22) and a value of a result (result data 24) are associated with each other. For example, in manufacturing a product, a content of a specific material may affect quality of the product. In view of this, it is conceived to handle a flag (hereinafter, a defect flag) indicating, as factor data 22, a content of a specific material, and indicating, as result data 24, whether a product is a defective product.

The analyzing apparatus 2000 divides each piece of target data 20 into two parts by a plurality of different patterns, and computes, for each pattern, a test statistical quantity representing a difference between two sets (samples) to be acquired by dividing into two parts. For this reason, the analyzing apparatus 2000 further acquires division number information 30. The division number information 30 indicates a number (hereinafter, a division number) representing into which a numerical range of factor data 22 is divided.

The analyzing apparatus 2000 computes each boundary value for dividing a numerical range of factor data 22 by a division number indicated by division number information 30. For example, it is assumed that a numerical range of factor data 22 is from 0 to 100, and a division number is 4. A boundary value for equally dividing the numerical range into four parts is 25, 50, and 75. Thus, these three boundary values are determined by the analyzing apparatus 2000.

The analyzing apparatus 2000 performs the following processing for each of a plurality of determined boundary values. First, the analyzing apparatus 2000 divides a target data set 10 into two sets (hereinafter, a first sample and a second sample) at the boundary value as a boundary. Thus, a pair (hereinafter, a sample pair) of a first sample and a second sample having the number of pairs equal to the division numbers is acquired.

Further, the analyzing apparatus 2000 computes, for each boundary value, a test statistical quantity representing a difference relating to result data 24 for a sample pair acquired by division based on the boundary value. For example, it is assumed that a piece of result data 24 is a defect flag. In this case, for example, the analyzing apparatus 2000 computes a test statistical quantity representing a difference between a defect rate (ratio of defective products with respect to a total number of products) of a product in a first sample, and a defect rate of a product in a second sample.

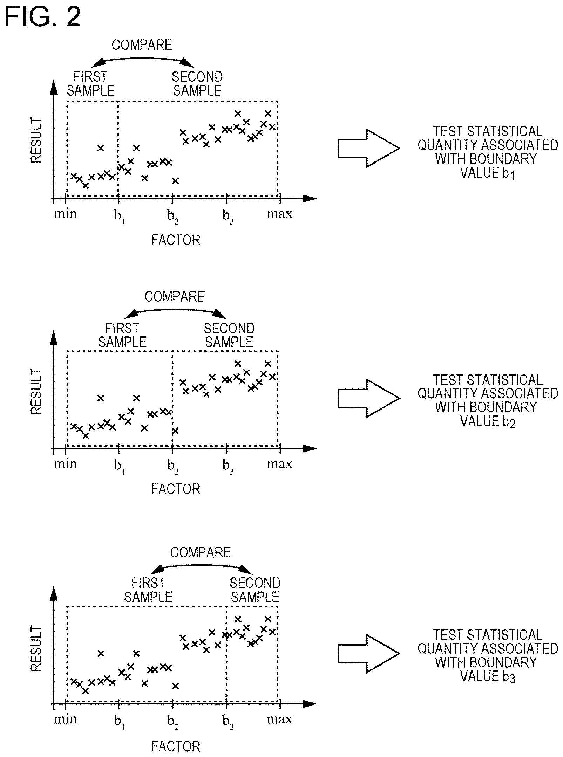

Fig. 2 is a diagram conceptually illustrating processing of computing a test statistical quantity for each sample pair. A graph in Fig. 2 indicates a value of factor data 22 on a horizontal axis, and a value of result data 24 on a vertical axis. Result data 24 indicate a defect rate. In this example, the division number is 4. Therefore, three boundary values b1, b2, and b3 are computed. Note that, min and max on the horizontal axis are respectively an upper limit and a lower limit of a numerical range of factor data 22.

The analyzing apparatus 2000 divides, by using the boundary value b1, a target data set 10 into a first sample including target data 20 in which a piece of factor data 22 is equal to or less than b1, and a second sample including target data 20 in which a piece of factor data 22 is more than b1. Then, the analyzing apparatus 2000 computes, as a test statistical quantity associated with the boundary value b1, a test statistical quantity representing a difference relating to result data 24 for the first sample and the second sample. For example, in a case where result data 24 indicate whether a product is a defective product, it is conceived to compute a defect rate for each of a first sample and a second sample, and compute a test statistical quantity representing a difference between the computed defect rates. Likewise, the analyzing apparatus 2000 also computes a test statistical quantity representing a difference relating to result data 24 for a first sample and a second sample to be acquired by using the boundary value b2, and a test statistical quantity representing a difference of a defect rate to a difference relating to result data 24 for a first sample and a second sample to be acquired by using the boundary value b3.

The analyzing apparatus 2000 generates test statistical quantity information indicating a plurality of computed test statistical quantities. For example, test statistical quantity information is a chart indicating a correlation between a boundary value, and a sample pair acquired by dividing at the boundary value as a reference. In Fig. 1, a line graph indicating a boundary value on a horizontal axis, and indicating a test statistical quantity computed at the boundary value on a vertical axis is generated as test statistical quantity information 40.

<One Example of Advantageous Effect>

In the analyzing apparatus 2000 according to the present example embodiment, processing of "dividing a target data set 10 into two samples, based on a value of a piece of factor data 22, and computing a test statistical quantity representing a difference relating to result data 24 for these two samples" is performed by a plurality of patterns, each of which uses a different boundary value. Then, test statistical quantity information 40 indicating a test statistical quantity acquired for each of the plurality of patterns is output. A user viewing the test statistical quantity information 40 as described above can easily recognize "what value of a piece of factor data 22 is appropriate to acquire a good result". Specifically, the analyzing apparatus 2000 enables to accurately and easily recognize what value of a piece of factor data 22 is appropriate in terms of a relation with respect to result data 24.

Herein, advanced statistical knowledge is necessary to appropriately perform a data analysis. Therefore, when a person other than a specialist having such knowledge attempts to perform a data analysis, a large number of hours may be needed, or an error may occur in an analysis. In this regard, the analyzing apparatus 2000 automatically performs processing of dividing data by a plurality of patterns, and processing of computing a test statistical quantity for each pattern, and therefore, even a person (e.g., a business person in a company, or the like) who does not have advanced statistical knowledge can accurately and easily recognize an appropriate value for factor data 22 that may affect result data 24.

Hereinafter, the present example embodiment is further described in detail.

<Example of Functional Configuration>

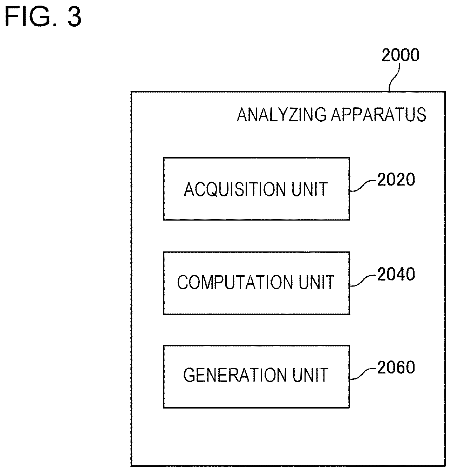

Fig. 3 is a diagram illustrating a functional configuration of the analyzing apparatus 2000 according to the example embodiment 1. The analyzing apparatus 2000 includes an acquisition unit 2020, a computation unit 2040, and a generation unit 2060. The acquisition unit 2020 acquires a target data set 10 and division number information 30. The computation unit 2040 computes a plurality of boundary values for dividing a numerical range of factor data 22 into a division number indicated by the division number information 30. Further, the computation unit 2040 computes, for each of a plurality of boundary values, a test statistical quantity representing a difference relating to the result data 24 for a first sample and a second sample to be acquired by dividing the target data set 10 into two parts at the boundary value. The generation unit 2060 generates test statistical quantity information indicating a plurality of computed test statistical quantities.

<Example of Hardware Configuration of Analyzing Apparatus 2000>

Each functional configuration unit of the analyzing apparatus 2000 may be achieved by hardware (example: a hard-wired electronic circuit, and the like) for achieving each functional configuration unit, or may be achieved by combination of hardware and software (example: combination of an electronic circuit and a program for controlling the electronic circuit, and the like). Hereinafter, a case where each functional configuration unit of the analyzing apparatus 2000 is achieved by combination of hardware and software is further described.

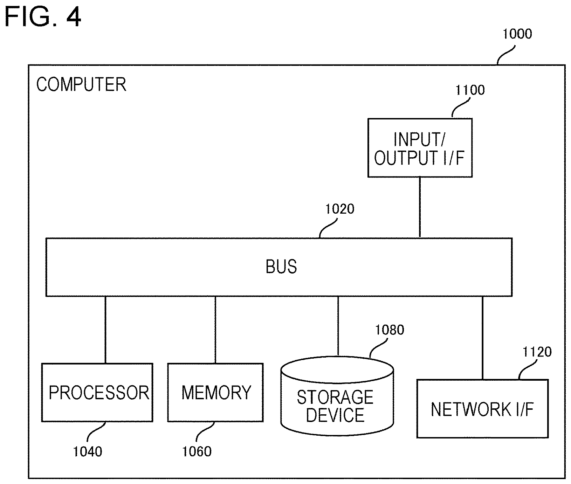

Fig. 4 is a diagram illustrating a computer 1000 for achieving the analyzing apparatus 2000. The computer 1000 is any computer. For example, the computer 1000 is a stationary computer such as a personal computer (PC), and a server machine. In addition to the above, for example, the computer 1000 is a portable computer such as a smartphone and a tablet terminal.

The computer 1000 may be a dedicated computer designed for achieving the analyzing apparatus 2000, or may be a general-purpose computer. In the latter case, for example, the computer 1000 achieves each function of the analyzing apparatus 2000 by installing a predetermined application in the computer 1000. The above-described application is configured of a program for achieving a functional configuration unit of the analyzing apparatus 2000.

The computer 1000 includes a bus 1020, a processor 1040, a memory 1060, a storage device 1080, an input/output interface 1100, and a network interface 1120. The bus 1020 is a data transmission path along which the processor 1040, the memory 1060, the storage device 1080, the input/output interface 1100, and the network interface 1120 mutually transmit and receive data. However, a method of mutually connecting the processor 1040 and the like is not limited to bus connection.

The processor 1040 is various processors such as a central processing unit (CPU), a graphics processing unit (GPU), and a field-programmable gate array (FPGA). The memory 1060 is a main storage apparatus to be achieved by using a random access memory (RAM) or the like. The storage device 1080 is an auxiliary storage apparatus to be achieved by using a hard disk, a solid state drive (SSD), a memory card, a read only memory (ROM), or the like.

The input/output interface 1100 is an interface for connecting the computer 1000 to an input/output device. For example, the input/output interface 1100 is connected to an input apparatus such as a keyboard, and an output apparatus such as a display apparatus.

The network interface 1120 is an interface for connecting the computer 1000 to a communication network. The communication network is, for example, a local area network (LAN) or a wide area network (WAN).

The storage device 1080 stores a program (program for achieving the above-described application) for achieving each functional configuration unit of the analyzing apparatus 2000. The processor 1040 achieves each functional configuration unit of the analyzing apparatus 2000 by reading the program in the memory 1060 and executing the program.

<Example of Usage Environment of Analyzing Apparatus 2000>

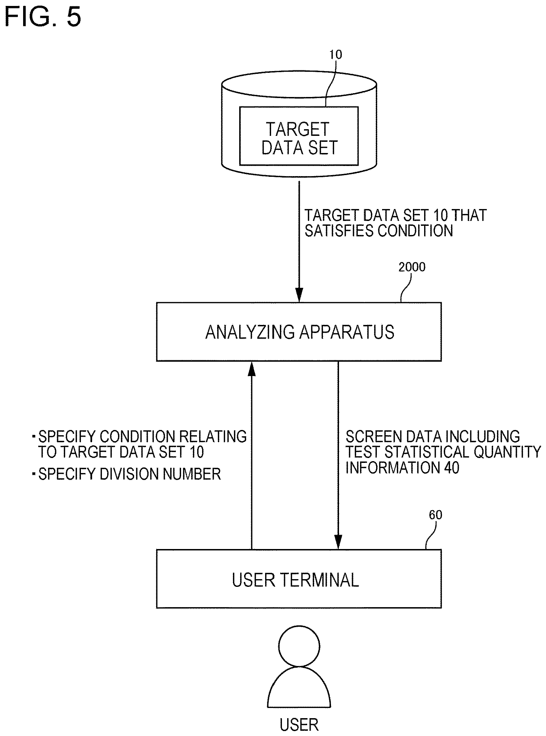

One example of a usage environment of the analyzing apparatus 2000 is described for facilitating understanding of the analyzing apparatus 2000. Fig. 5 is a diagram illustrating a usage environment of the analyzing apparatus 2000.

In Fig. 5, the analyzing apparatus 2000 is connected to a user terminal 60 via a network. A user operates the user terminal 60, and transmits a request to the analyzing apparatus 2000 in such a way that test statistical quantity information 40 about a target data set 10 is provided. For example, the request includes information representing a condition relating to the target data set 10, and division number information 30. The analyzing apparatus 2000 acquires the target data set 10 associated with a condition indicated in a request, and performs generation of the test statistical quantity information 40 by using the target data set 10 and the division number information 30. Then, the analyzing apparatus 2000 transmits the generated test statistical quantity information 40 to the user terminal 60.

For example, the analyzing apparatus 2000 provides the user terminal 60 with screen data (e.g., a Web page) including test statistical quantity information 40. In this case, the user terminal 60 displays a received Web page by a browser. By doing so, a user can browse the test statistical quantity information 40.

A usage environment of the analyzing apparatus 2000 is not limited to that illustrated in Fig. 4. For example, the analyzing apparatus 2000 may be directly operated by a user, instead of being used via the user terminal 60.

<Flow of Processing>

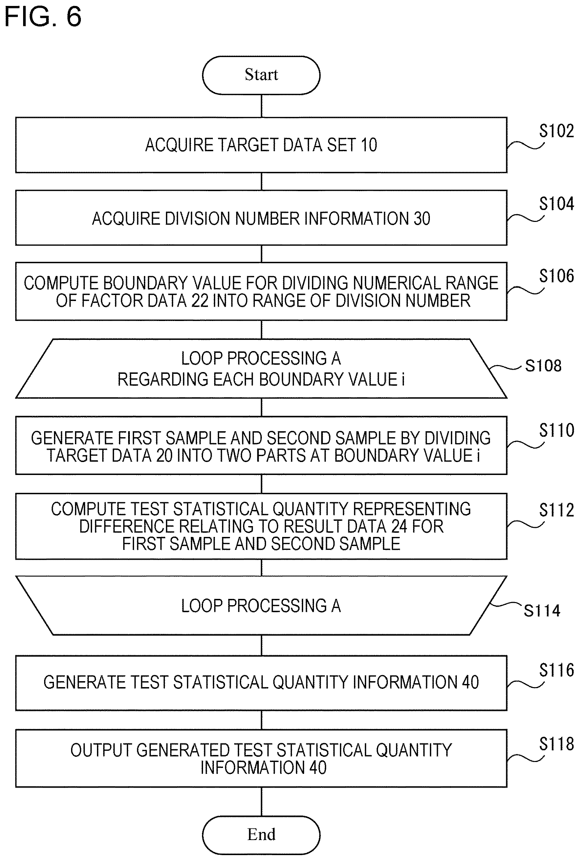

Fig. 6 is a flowchart illustrating a flow of processing to be performed by the analyzing apparatus 2000 according to the example embodiment 1. The acquisition unit 2020 acquires a target data set 10 (S102). The acquisition unit 2020 acquires division number information 30 (S104). The computation unit 2040 computes a plurality of boundary values for dividing a numerical range of factor data 22 into a division number indicated by the division number information 30 (S106).

S108 to S114 are loop processing A to be performed for each boundary value. In S108, the computation unit 2040 determines whether the loop processing A has already been performed for all the boundary values as a target. In a case where the loop processing A has already been performed for all the boundary values as a target, processing in Fig. 6 proceeds to S116. On the other hand, in a case where a boundary value for which the loop processing A has not yet been performed as a target is present, the computation unit 2040 selects one of the boundary values. Then, processing in Fig. 6 proceeds to S110. Note that, a boundary value selected herein is referred to as a boundary value i.

The computation unit 2040 generates a first sample and a second sample by dividing the target data set 10 into two parts at the boundary value i (S110). The computation unit 2040 computes a test statistical quantity relating to result data 24 for the first sample and the second sample (S112). Since S114 is a termination of the loop processing A, processing in Fig. 6 proceeds to S108.

After the loop processing A, the generation unit 2060 generates test statistical quantity information 40 for a plurality of computed test statistical quantities (S116). The generation unit 2060 outputs the test statistical quantity information 40 (S118).

<Regarding Target Data Set 10>

A target data set 10 is a set including a plurality of pieces of target data 20, each of which is a pair of factor data 22 and result data 24. Each piece of target data 20 indicates, for example, data for each case in which the same processing or same operation has been performed each at a different time. For example, as described above, it is assumed that the target data 20 indicate a content of a specific material, and whether a product manufactured by using the material containing the content is a defective product for each of factor data 22 and result data 24. In this case, for example, each piece of target data 20 indicates, for a product manufactured each at a different time, a content of the material having the above-described characteristic and used in a product manufactured at the time, and whether the product is a defective product.

Herein, learning data for learning an estimation model that estimates a value of a target variable from values of a plurality of explanatory variables may be used as target data 20. For example, it is assumed that an estimation model that "estimates an index relating to a product to be generated in a manufacturing condition, based on each index higher than an index representing the manufacturing condition of the product by one stage" is generated. In this case, each index representing a manufacturing condition represents an explanatory index, and an index relating to a manufactured product represents a target variable. An index representing a manufacturing condition is, for example, an environment such as a temperature and humidity, a content of each material, and the like. An index relating to a product is, for example, a flag indicating whether a product is a defective product, an index representing a specific performance relating to a product, and the like.

A value of an explanatory variable and a value of a target variable described above may be respectively handled as factor data 22 and result data 24. In view of this, for example, learning data to be used in generation of such an estimation model can be used as target data 20.

The acquisition unit 2020 acquires a target data set 10 (S102). There are various methods of acquiring a target data set 10 by the acquisition unit 2020. For example, the acquisition unit 2020 acquires a target data set 10 from a storage apparatus in which the target data set 10 is stored. In addition to the above, for example, the acquisition unit 2020 may acquire a target data set 10 by receiving the target data set 10 transmitted from another apparatus.

Herein, in a case where a plurality of target data sets 10 are stored in a storage apparatus, the acquisition unit 2020 determines a target data set 10 from which test statistical quantity information 40 is to be generated, and acquires the determined target data set 10 from the storage apparatus. In this case, for example, the acquisition unit 2020 acquires a condition relating to a target data set 10 to be acquired, and acquires the target data set 10 that matches the condition.

A condition relating to a target data set 10 is, for example, a condition such as identification information (such as a name) of a target data set 10, a period during which a target data set 10 is acquired, a place (e.g., a manufacturing place of a product, and the like) relating to a target data set 10, and the like. Herein, in a case where a target data set 10 is used in generation of an estimation model, identification information of an estimation model generated by using the target data set 10 may be used as identification information of the target data set 10. Information representing these conditions relating to a target data set 10 is, for example, included in a request to be transmitted from the above-described user terminal 60.

Note that, target data 20 stored in a storage apparatus may not be divided in a unit of a target data set 10. In this case, for example, the acquisition unit 2020 acquires a condition relating to target data 20 included in a target data set 10, and acquires the target data 20 that match the condition from a storage apparatus. Then, the acquisition unit 2020 handles a group of pieces of the acquired target data 20, as the target data set 10. A condition relating to target data 20 is, for example, a period during which target data 20 are acquired, a place (e.g., a manufacturing place of a product) relating to target data 20, and the like.

In addition to the above, for example, in a case where another processing using a target data set 10 has already been performed before generation of test statistical quantity information 40, the analyzing apparatus 2000 may acquire the target data set 10 by taking over the target data set 10 from the another processing as described above. For example, processing of generating an estimation model by using a target data set 10, processing of visualizing a target data set 10 by using a graph and the like, and the like are conceived as another processing using a target data set 10.

For example, an interface (such as a button) that requests generation of test statistical quantity information 40 relating to a target data set 10 used in the processing is provided on a screen representing a result of the processing. The analyzing apparatus 2000 generates and outputs test statistical quantity information 40 in response to a request using the interface. Thus, a user can easily acquire information called test statistical quantity information 40, which is acquired by analyzing a target data set 10 from another viewpoint, for a target data set 10 used in generation of an estimation model, or a visualized target data set 10.

Note that, in a case where an apparatus that performs processing such as generation of an estimation model is an apparatus different from the analyzing apparatus 2000, identification information of a target data set 10 and a target data set 10 itself are included in a request from the apparatus. Thus, the analyzing apparatus 2000 can acquire a target data set 10.

Note that, in a case where data for each of a plurality of kinds of factors are included in target data 20, it is necessary to determine which factor is to be targeted to divide a target data set 10 into samples (specifically, which data of a factor are to be handled as factor data 22). The determination method is optional. For example, the acquisition unit 2020 accepts, from a user, an input of specifying which data of a factor are to be handled as factor data 22. In addition to the above, for example, in a case where a target data set 10 is taken over from another processing as described above, data of a factor targeted in the another processing may be handled as factor data 22. For example, in a case where a target data set 10 is taken over from processing of visualizing data of a certain factor, the visualized data of the factor are handled as factor data 22.

<Acquisition of Division Number Information 30: S104>

The acquisition unit 2020 acquires division number information 30 (S104). There are various methods of acquiring division number information 30 by the acquisition unit 2020. For example, the acquisition unit 2020 acquires division number information 30 stored in a storage apparatus. In addition to the above, for example, the acquisition unit 2020 may acquire division number information 30 by accepting a user's operation of inputting a division number. In addition to the above, for example, the acquisition unit 2020 may acquire division number information 30 by receiving the division number information 30 transmitted from another apparatus. In this case, for example, the division number information 30 is included in a request to be transmitted from the above-described user terminal 60.

<Computation of Boundary Value: S106>

The computation unit 2040 computes a plurality of boundary values for dividing a numerical range of factor data 22 by a division number indicated by division number information 30 (S106). In view of this, the computation unit 2040 determines a numerical range of factor data 22. For example, the computation unit 2040 handles, as a numerical range of factor data 22, a numerical range in which a minimum value among factor data 22 included in a target data set 10 sets as a lower limit, and a maximum value among the factor data 22 included in the target data set 10 sets as an upper limit.

In addition to the above, for example, the computation unit 2040 may determine a numerical range of factor data 22 after eliminating a part of target data 20 included in a target data set 10. In this case, for example, the computation unit 2040 handles, as a numerical range of factor data 22, a numerical range in which a minimum value and a maximum value of factor data 22 included in a target data set 10 after the elimination are respectively set as a lower limit and an upper limit. Target data 20 to be eliminated from a target data set 10 are, for example, data in which a piece of factor data 22 indicates an outlier. Note that, existing various methods are available as a method of determining an outlier from a plurality of numerical values.

In addition to the above, for example, the computation unit 2040 may acquire information in which a numerical range of factor data 22 is defined. In this case, a lower limit of a numerical range of factor data 22 may be less than a minimum value of a piece of the factor data 22 included in a target data set 10, or an upper limit of the numerical range of the factor data 22 may be more than a maximum value of a piece of the factor data 22 included in the target data set 10.

The computation unit 2040 computes each boundary value for equally dividing a numerical range of determined factor data 22 into a division number indicated by division number information 30. Such a boundary value can be computed, for example, by the following equation (1).

$$b\_i = (max - min)/N * i \qquad (1)$$

Herein, bi represents the i-th boundary value counted from a minimum value. max represents an upper limit of a numerical range of factor data 22, and min represents a lower limit of the numerical range of the factor data 22. N represents a division number. Note that, a number of boundary values becomes N-1.

<Generation of Sample Pair: S110>

The computation unit 2040 generates a sample pair (a first sample and a second sample) for each boundary value by dividing a target data set 10 into two parts at the boundary value (S110). For example, the computation unit 2040 divides a target data set 10 into two parts, namely, a set of target data 20 indicating factor data 22 equal to or less than a boundary value, and a set of target data 20 indicating factor data 22 more than the boundary value. The former is handled as a first sample, and the latter is handled as a second sample. However, the computation unit 2040 may generate and set, as a first sample, a set of target data 20 indicating a piece of factor data 22 less than a boundary value, and generate and set, as a second sample, a set of target data 20 indicating a piece of factor data 22 equal to or more than the boundary value.

<Computation of Test Statistical Quantity: S112>

The computation unit 2040 computes, for each boundary value, a test statistical quantity representing a difference relating to result data 24 for a first sample and a second sample generated by using the boundary value (S112). Herein, as a test for comparing two samples as described above, a test on a difference in a ratio, a test on a difference in an average value, and the like are available. The computation unit 2040 computes a test statistical quantity usable for these tests. As a kind of a test statistical quantity, various kinds such as a two-sample t-test quantity can be adopted.
For example, it is assumed that a test on a difference in a ratio is performed for a first sample and a second sample. In this case, the computation unit 2040 computes a test statistical quantity representing a difference between a ratio of a predetermined kind relating to result data 24 included in a first sample, and a ratio of a predetermined kind relating to result data 24 included in a second sample. For example, in a case where a piece of result data 24 is a defect flag, it is possible to use, as a ratio of a predetermined kind relating to the result data 24, a defect rate (ratio of a number of pieces of target data 20 in which factor data 22 indicate a defective product with respect to a total number of pieces of target data 20 included in a sample).
Note that, a kind of a test and a kind of a test statistical quantity may be fixedly defined in advance, or may be specified by user input or the like.

<Generation of Test Statistical Quantity Information: S116>

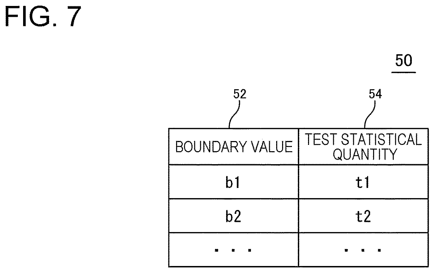

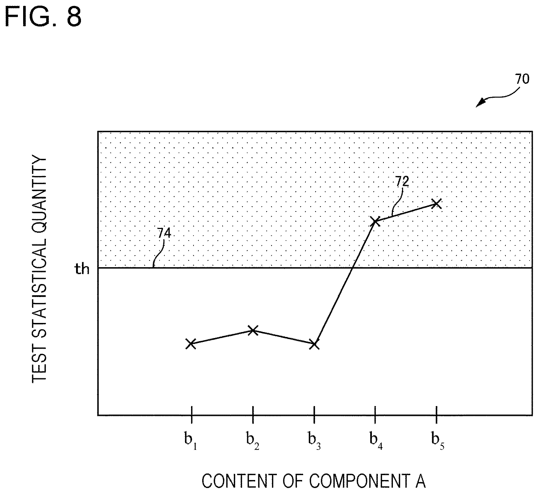

The generation unit 2060 generates test statistical quantity information 40 indicating a test statistical quantity computed for each boundary value (S 116). The test statistical quantity information 40 represents a boundary value, and a test statistical quantity computed for the boundary value in association with each other. Information in various forms such as a chart can be adopted as such information.
For example, test statistical quantity information 40 includes a table representing a correlation between a boundary value and a test statistical quantity. Fig. 7 is a diagram illustrating test statistical quantity information 40 to be achieved as a table. The table in Fig. 7 is referred to as a table 50. The table 50 includes a boundary value 52 and a test statistical quantity 54. In Fig. 7, one record in the table 50 indicates a boundary value, and a test statistical quantity computed for two samples acquired by dividing a target data set 10 at the boundary value in association with each other.
Test statistical quantity information 40 may be a graph (hereinafter, a test statistical quantity graph) representing a correlation between a boundary value and a test statistical quantity. Fig. 8 is a diagram illustrating test statistical quantity information 40 to be achieved as a test statistical quantity graph 70. In the test statistical quantity graph 70, an X axis represents a boundary value, and a Y axis represents a test statistical quantity.
In the test statistical quantity graph 70, each correlation between a boundary value and a test statistical quantity is plotted, and a line 72 in which these plots are connected is displayed. Note that, a kind of a graph is not limited to a line graph, and graphs of various kinds such as a bar graph can be adopted.
The test statistical quantity graph 70 includes a threshold indication 74 representing a threshold value of a test statistical quantity. The threshold indication 74 represents a threshold value of a test statistical quantity to be acquired based on a significance level. In the test statistical quantity graph 70, a test statistical quantity equal to or more than a threshold value represented by the threshold indication 74 is a statistically significant value. Specifically, in a case where a test statistical quantity exceeds a threshold value, it can be said that there is a statistically significant difference between two samples divided at a boundary value associated with the test statistical quantity. In this way, by including the threshold indication 74 in the test statistical quantity graph 70, it is possible to easily recognize whether a test statistical quantity associated with each boundary value is a statistically significant value.
For example, in Fig. 8, it is assumed that a piece of result data 24 is a defect flag, and factor data 22 represent a content of a component A. Further, it is assumed that a test on a difference in a defect rate between samples is performed. Further, it is assumed that, in a case where a defect rate of a second sample is higher than that of a first sample, a test statistical quantity has a positive value.

Observing the test statistical quantity graph 70, in a case where a boundary value is equal to or less than b3, a test statistical quantity becomes less than the threshold value. On the other hand, in a case where a boundary value is equal to or more than b4, a test statistical quantity becomes more than the threshold value. In view of this, it is clear that there is a significant difference in a defect rate of a product, when a product in which a content of the component A is equal to or more than b4 is compared with a product in which a content of the component A is less than b4. Therefore, a user, when observing the test statistical quantity graph 70 in Fig. 8, can easily recognize that "it is appropriate to set a content of the component A to be less than b4 in order to reduce a defect rate".

Note that, in Fig. 8, by imparting a color (pattern for convenience of illustration) to an area on an upper side of the threshold indication 74, it becomes easier to recognize an area where a test statistical quantity is equal to or more than a threshold value, and an area other than the above. Coloring may also be performed in an area on a lower side of the threshold indication 74. Further, coloring may not be performed in an area on an upper side of the threshold indication 74, and may be performed exclusively in an area on a lower side of the threshold indication 74.

Further, the generation unit 2060 may display, in the test statistical quantity graph 70, a plot representing a test statistical quantity equal to or more than a threshold value in an emphasizing manner. As a method of emphasis display, various methods such as increasing a size of a plot, changing a shape of a plot, and blinking a plot can be adopted.

A threshold value of a test statistical quantity can be acquired by converting a significance level into a test statistical quantity. For example, it is assumed that a significance level is 5%, and a kind of a test statistical quantity is t value. In this case, by converting p value=0.05, which represents a significance level of 5%, into t value, a threshold value of t value can be acquired. Note that, as a specific method of converting a value representing a significance level into a test statistical quantity, an existing method according to a kind of a test statistical quantity can be used.

A significance level may be fixedly defined in advance, or may be specified by a user. For example, the analyzing apparatus 2000 provides a user with a screen through which information such as a division number, a kind of a test, and a significance level can be specified.

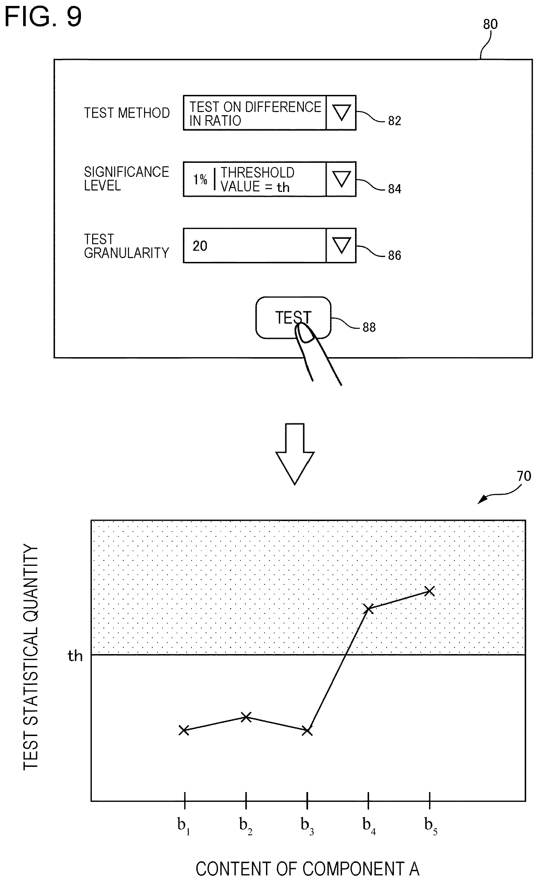

Fig. 9 is a diagram illustrating a screen to be provided to a user. A screen 80 in Fig. 9 includes input areas 82, 84, and 86. These areas are each an input area through which a kind of a test, a significance level, and a division number can be specified. Note that, since a division number can also be said to be granularity of a test, in Fig. 9, the division number is expressed as "test granularity". After inputting information to these input areas, a user presses a button 88 for performing a test. Consequently, the test statistical quantity graph 70 illustrated in Fig. 8 is displayed. Note that, the test statistical quantity graph 70 may be displayed on the screen 80, or may be displayed on a screen other than the screen 80. Note that, the button 88 is not an essential element, and the test statistical quantity graph 70 reflecting a content of an input may be automatically generated and displayed in response to the input to each input area.

<Output of Test Statistical Quantity Information 40: 118>

The generation unit 2060 outputs generated test statistical quantity information 40 (S118). An output destination of test statistical quantity information 40 is optional. For example, the generation unit 2060 causes a display apparatus accessible from the analyzing apparatus 2000 to display test statistical quantity information 40. In addition to the above, for example, the generation unit 2060 stores test statistical quantity information 40 in a storage apparatus accessible from the analyzing apparatus 2000. In addition to the above, for example, the generation unit 2060 transmits test statistical quantity information 40 to another apparatus (e.g., the user terminal 60) accessible from the analyzing apparatus 2000.

<Display of Histogram>

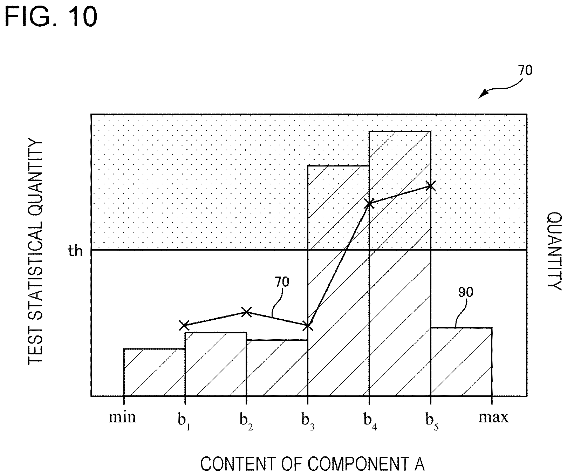

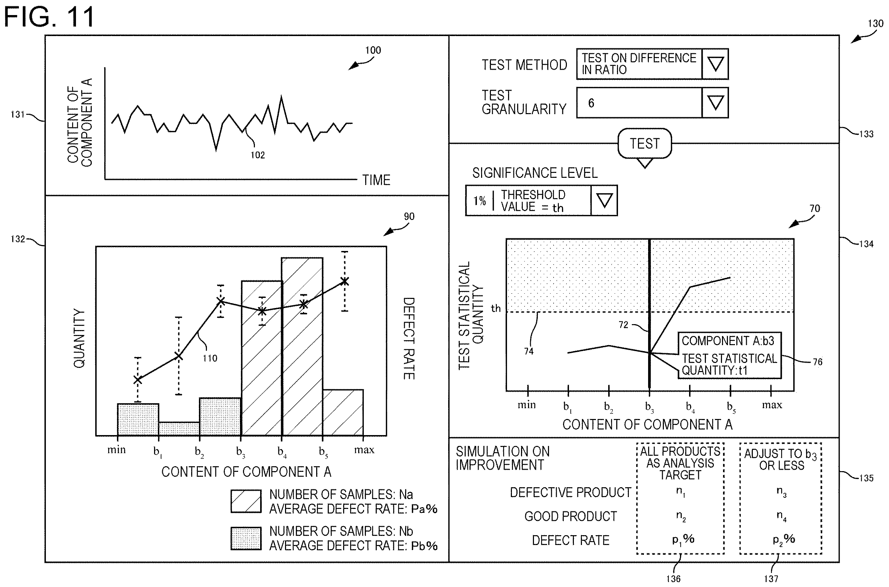

The generation unit 2060 may generate a histogram relating to factor data 22 included in a target data set 10, and output the histogram along with test statistical quantity information 40. For example, a histogram and test statistical quantity information 40 are output by being included in a same screen. Fig. 10 is a diagram illustrating a screen including a histogram 90 and test statistical quantity information 40. In Fig. 10, the histogram 90 is included in the above-described test statistical quantity graph 70. Note that, as illustrated in Fig. 11 to be described later, the test statistical quantity graph 70 and the histogram 90 may be displayed separately.

A histogram 90 is generated as follows, for example. First, the generation unit 2060 generates a partial range by dividing a numerical range of factor data 22 at each boundary value. The generation unit 2060 counts, for each partial range, a number of pieces of target data 20 in which factor data 22 belong to the partial range. Then, the generation unit 2060 generates a histogram 90 representing a correlation between the partial range and the number of pieces of the target data 20.

In this way, by outputting a histogram 90 in addition to test statistical quantity information 40, a user can accurately and easily recognize by what value of factor data 22, a result can be made better, while recognizing how the factor data 22 are distributed.

<More Specific Output Example>

The generation unit 2060 may generate various pieces of information, in addition to the above-described information. Fig. 11 is a diagram illustrating a more specific example of information to be generated by the generation unit 2060. In this example, a screen 130 is generated by the generation unit 2060. The screen 130 includes a display area 131, a display area 132, a display area 133, a display area 134, and a display area 135.

A time series graph 100 representing a time change of target data 20 is indicated in the display area 131. In the time series graph 100, a line 102 represents a time change of factor data 22. In this case, for example, a target data set 10 is time series data in which each piece of target data 20 is associated with time. However, by accumulating data at a specific cycle, the data may be handled and used as time series data.

The histogram 90 is displayed in the display area 132. An input interface for specifying a test method and test granularity (equivalent to a division number), and a button for instructing performing a test are displayed in the display area 133.

An input interface for specifying a significance level, and the test statistical quantity graph 70 are displayed in the display area 134. The test statistical quantity graph 70 in Fig. 11 includes a bar 72 and an explanatory indication 76. The bar 72 is an interface for specifying an intended boundary value. A user can change an intended boundary value by moving the bar 72 leftward or rightward. The explanatory indication 76 indicates a boundary value and a test statistical quantity for a boundary value specified by the bar 72.

The histogram 90 has different display aspects in a rank lower than a boundary value specified by the bar 72, and a rank higher than the boundary value. Specifically, different patterns are imparted to data of each rank in which a value is less than the boundary value b3 specified by the bar 72, and data of each rank in which a value is more than the boundary value b3. Note that, a display aspect to be differentiated is not limited to a pattern, and a kind of color, a kind of frame line, and the like may be adopted.

Further, a line 110 indicating a defect rate for each rank is indicated over the histogram 90 in the display area 132. Further, a confidence interval of a defect rate in each rank is indicated by a dotted line.

The display area 135 indicates simulation on a degree of improvement of a value relating to result data 24, based on a boundary value specified by the bar 72. For example, it is assumed that a test statistical quantity is computed for a defect rate. Further, it is assumed that a defect rate is lowered by decreasing a value of factor data 22. In this case, the display area 135 includes a display area 136 indicating a defect rate and the like in the entirety of target data 20, and a display area 137 indicating a defect rate and the like in a case where factor data 22 are limited to a value equal to or less than a boundary value specified by the bar 72.

It can be said that information indicated in the display area 137 represents how much improvement can be expected by adjusting a factor (in this example, a content of the component A) in such a way that factor data 22 becomes equal to or less than a specified boundary value. Thus, according to such display, it is possible to easily recognize an effect (in this example, improvement of a defect rate) expectable by adjustment of a factor.

Herein, as described above, by allowing a user to move the bar 72 leftward or rightward, it is possible to change a specified boundary value. The generation unit 2060 changes a content of the display area 137 in response to movement of the bar 72 (changing specification of a boundary value). Therefore, a user can confirm an effect expectable by adjustment of a factor, while moving the bar 72.

Further, the generation unit 2060 also changes a display aspect of data in the histogram 90 in response to movement of the bar 72. By doing so, a user can easily confirm a sample used in simulation on improvement.

Note that, in the example in Fig. 11, since a defect rate is lowered by decreasing factor data 22, the display area 137 displays "adjust to b3 or less". In this regard, in a case where a defect rate is lowered by increasing factor data 22, the display becomes "adjust to b3 or more".

Information for determining whether factor data 22 are to be decreased or increased for improvement is acquired in advance. For example, as described above, it is assumed that learning data for learning an estimation model that estimates a value of a target variable from values of a plurality of explanatory variables are used as target data 20. In this case, it is possible to determine whether factor data 22 associated with a certain explanatory variable are to be decreased or increased for improvement depending on which influence, a positive influence or a negative influence, the explanatory variable imparts to a target variable in an estimation model.

[Modification Example]

In the example described so far, target data 20 associate one piece of factor data 22 with one piece of result data 24. Alternatively, target data 20 may associate two pieces of factor data 22 with one piece of result data 24. In this case, at a time of dividing a target data set 10 into two samples, division is performed by focusing on two factors. Hereinafter, an analyzing apparatus 2000 that performs such processing is referred to as an analyzing apparatus 2000 according to a modification example.

In the analyzing apparatus 2000 according to the modification example, an acquisition unit 2020 acquires a target data set 10 including a plurality of pieces of target data 20 in which first factor data 22 (hereinafter, factor data 22-1), second factor data 22 (hereinafter, factor data 22-2), and result data 24 are associated with one another.

A computation unit 2040 divides each of a numerical range of factor data 22-1, and a numerical range of factor data 22-2 by a division number indicated by division number information 30. Note that, division number information 30 may indicate a division number common between factor data 22-1 and factor data 22-2, or may indicate a different division number for each of factor data 22-1 and factor data 22-2. For example, it is assumed that a division number of factor data 22-1 is 4, and a division number of factor data 22-2 is 5. In this case, the computation unit 2040 equally divides a numerical range of the factor data 22-1 into four parts, and equally divides a numerical range of the factor data 22-2 into five parts. Specifically, the computation unit 2040 determines three boundary values for the factor data 22-1, and determines four boundary values for the factor data 22-2.

The computation unit 2040 divides a target data set 10 into two parts for each of a plurality of pairs of a boundary value for factor data 22-1 and a boundary value for factor data 22-2 at a boundary defined by the pair, and generates a first sample and a second sample. Then, as described above, the computation unit 2040 computes a test statistical quantity for the generated first and second samples.

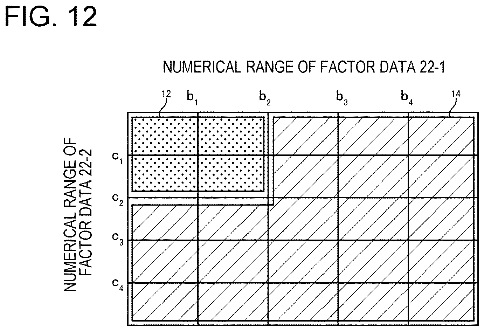

Fig. 12 is a diagram illustrating a first sample and a second sample in the analyzing apparatus 2000 according to the modification example. In this example, a first sample and a second sample are generated at a boundary defined by a pair of a boundary value b2 for factor data 22-1, and a boundary value c2 for factor data 22-2. Specifically, the computation unit 2040 generates, as a first sample 12, a set of target data 20 that satisfies a condition "factor data 22-1 are b2 or less, and factor data 22-2 are c2 or less", and generates, as a second sample 14, a set of target data 20 that satisfies a condition "factor data 22-1 are more than b2, or factor data 22-2 are more than c2".

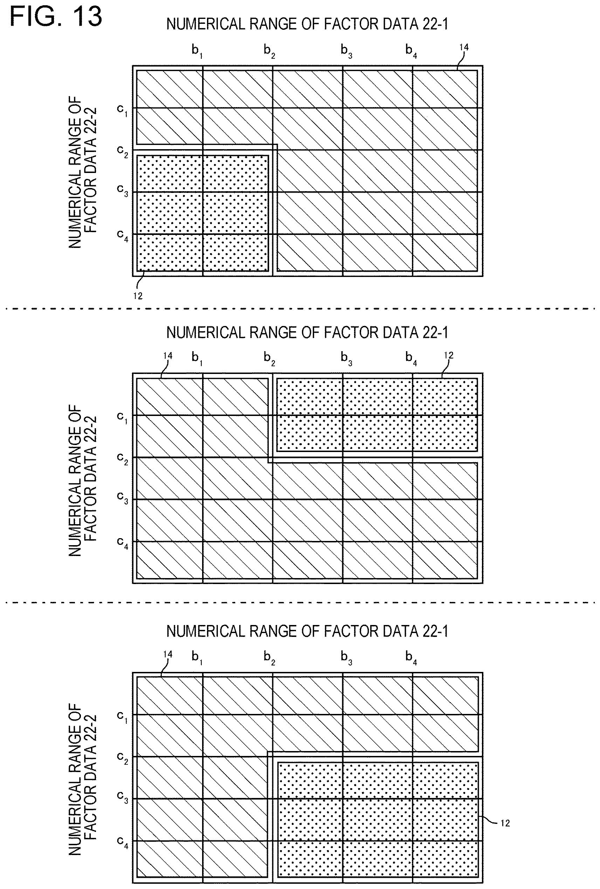

However, as described above, as a method of dividing a target data set 10 into two samples by using a pair of two boundary values, a method other than the method (hereinafter, a first method) illustrated in Fig. 1 can be adopted. Fig. 13 is a diagram illustrating another method of dividing a target data set 10 into two samples by using a pair of two boundary values. As illustrated in Fig. 13, in addition to the above-described method, there are a second method of dividing into a part in which "factor data 22-1 are equal to or less than a boundary value, and factor data 22-2 are equal to or more than a boundary value", and a part in which "factor data 22-1 are more than a boundary value, or factor data 22-2 are less than a boundary value"; a third method of dividing into a part in which "factor data 22-1 are equal to or more than a boundary value, and factor data 22-2 are equal to or less than a boundary value", and a part in which "factor data 22-1 are less than a boundary value, or factor data 22-2 are more than a boundary value"; a fourth method of dividing into a part in which "factor data 22-1 are equal to or more than a boundary value, and factor data 22-2 are equal to or more than a boundary value", and a part in which "factor data 22-1 are less than a boundary value, or factor data 22-2 are less than a boundary value"; and the like. By which one of these methods, a target data set 10 is divided may be defined in advance, or may be selected by a user.

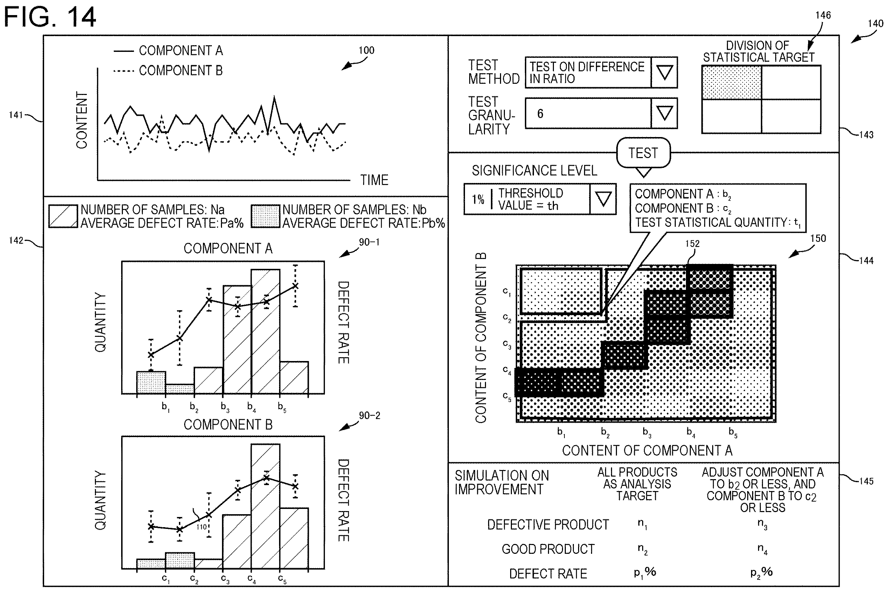

Fig. 14 is a diagram illustrating information to be output by the analyzing apparatus 2000 according to the modification example. A screen 140 illustrated in Fig. 14 is the one in which information represented by the screen 130 in Fig. 11 is applied to a case of using two factors.

The screen 140 includes display areas 141 to 145. The display area 141 includes a time series graph 100 representing a time change for each of factor data 22-1 and factor data 22-2. The display area 142 includes a histogram 90-1 for the factor data 22-1, and a histogram 90-2 for the factor data 22-2.

The display area 143 includes, similarly to the display area 133, an input interface for specifying a test method and test granularity, and a button for instructing performing a test. The display area 143 further includes an input interface 146 for specifying a method of dividing into a first sample and a second sample. The input interface 146 includes four areas constituted of a 4-division rectangle, and is configured in such a way that a user can specify one of the four areas. A color is imparted to a specified area.

The input interface 146 mimics a plane constituted of numerical ranges of two pieces of factor data 22, which is illustrated in Figs. 12 and 13. When a user specifies one of the four areas, a target data set 10 is divided into two samples in such a way that a plane constituted of numerical ranges of two pieces of factor data 22 is separated into a specified area and an area other than the above. For example, in the example in Fig. 14, an upper left area is specified. Therefore, the target data set 10 is divided into two samples, namely, a part in which "factor data 22-1 are equal to or less than a boundary value, and factor data 22-2 are equal to or less than a boundary value", and a part other than the above.

The display area 144 represents a test statistical quantity graph 150. The computation unit 2040 computes a test statistical quantity for each of a plurality of pairs of a boundary value of factor data 22-1 and a boundary value of factor data 22-2 with respect to two samples acquired by the pair, and generates statistical information 40 (herein, the test statistical quantity graph 150) representing a plurality of the test statistical quantities. Each cell of the test statistical quantity graph 150 represents a test statistical quantity acquired for a pair of boundary values associated with the cell. For example, in the example in Fig. 14, each cell represents a magnitude of a test statistical quantity acquired for a pair of boundary values represented by a lower right end of the cell.

In the test statistical quantity graph 150, a magnitude of a test statistical quantity is represented by a color, a pattern, or the like. For example, as a test statistical quantity increases, a color is darkened, or a pattern is thickened. In the example in Fig. 14, a larger dot pattern is imparted to a cell in which a test statistical quantity is large. Further, a frame 152 is imparted to a cell in which a test statistical quantity is equal to or more than a threshold value th.

A user can specify a pair of intended boundary values. Specifically, a user specifies one cell associated with a pair of intended boundary values. A generation unit 2060 generates information relating to improvement of a defect rate for a pair of samples to be generated by a specified cell and a specified sample dividing method in response to the specification.

In the example in Fig. 14, a cell representing a pair of boundary values "a boundary value of a component A=b2, a boundary value of a component B=c2" is specified. Further, a method of dividing a plane of a numerical range into an upper left part, and a part other than the above is specified. In view of this, a plane of a numerical range is divided into a sample in which "a value of the component A≤b2, and a value of the component B≤c2", and a sample in which "a value of the component A>b2, or a value of the component B>c2". Note that, display aspects of histograms 90-1 and 90-2 are changed in response to the specification. Specifically, as described in the example embodiment 1, a color or a pattern is set to be different from each other between a rank in which a value is equal to or less than a specified boundary value, and a rank other than the above.

The generation unit 2060 displays, in the display area 145, information indicating simulation on improvement of a defect rate for the above-described division. The display area 145 indicates a comparison on the number of defective products, the number of good products, and a defect rate with respect to target data 20 that satisfy a condition "the component A is set to be equal to or less than b2, and the component B is set to be equal to or less than c2", and a defect rate in all pieces of the target data 20. By comparison as described above, a user can easily recognize how much a defect rate can be improved by manufacturing a product in a manufacturing condition in which "the component A is set to be equal to or less than b2, and the component B is set to be equal to or less than c2".

While the example embodiment of the present invention has been described with reference to the drawings, the example embodiment is only exemplification of the present invention, and combination of the above-described example embodiments, or various configurations other than the above can also be employed.

A part or all of the above-described example embodiment may also be described as the following supplementary notes, but is not limited to the following.

1. An analyzing apparatus including:

an acquisition unit that acquires a set of target data each indicating a pair of factor data being a value relating to a factor, and result data being a value relating to a result, and division number information indicating a number for dividing a numerical range of the factor data;
a computation unit that computes, for each of a plurality of boundary values for dividing the numerical range into the number, a test statistical quantity representing a difference relating to the result data for two samples to be acquired by dividing target data included in the set of the target data into two parts at the boundary value; and
a generation unit that generates test statistical quantity information indicating a plurality of test statistical quantities computed for the each boundary value.

2. The analyzing apparatus according to supplementary note 1, wherein

the result data indicate presence or absence of a defect, and
the computation unit computes, for each boundary value, a defect rate for each of two samples, and computes a test statistical quantity representing a difference between computed two error rates.

3. The analyzing apparatus according to supplementary note 2, wherein

the factor data indicate a value of an index representing a manufacturing condition of a product, and
the result data indicate whether the product is a defective product.

4. The analyzing apparatus according to any one of supplementary notes 1 to 3, wherein
the test statistical quantity information is a graph indicating combination of the boundary value and the test statistical quantity.

5. The analyzing apparatus according to supplementary note 4, wherein
the generation unit includes, in the graph, an indication representing a threshold value of the test statistical quantity representing a significance level.

6. The analyzing apparatus according to supplementary note 4 or 5, wherein
the generation unit outputs a histogram representing a distribution of the factor data along with the graph.

7. The analyzing apparatus according to supplementary note 6, wherein
the generation unit

> accepts an input of specifying a boundary value to the graph, and
> makes a display aspect of data in a rank associated with each boundary value equal to or less than the specified boundary value, and a display aspect of data in a rank associated with each boundary value larger than the specified value to be different from each other in the histogram in response to acceptance of the input.

8. The analyzing apparatus according to any one of supplementary notes 1 to 7, wherein

> the target data indicate a set of the first factor data, the second factor data, and the result data, and
> the computation unit computes, for each set of a plurality of first boundary values for dividing a numerical range of the first factor data into the number, and a plurality of second boundary values for dividing a numerical range of the second factor data into the number, the test statistical quantity for two samples to be acquired by dividing target data included in the target data set into two parts, based on the set of boundary values.

9. A control method to be executed by a computer including:

> an acquisition unit that acquires a set of target data each indicating a pair of factor data being a value relating to a factor, and result data being a value relating to a result, and division number information indicating a number for dividing a numerical range of the factor data;
> a computation unit that computes, for each of a plurality of boundary values for dividing the numerical range into the number, a test statistical quantity representing a difference relating to the result data for two samples to be acquired by dividing target data included in the set of the target data into two parts at the boundary value; and
> a generation unit that generates test statistical quantity information indicating a plurality of test statistical quantities computed for the each boundary value.

10. The control method according to supplementary note 9, wherein

> the result data indicate presence or absence of a defect,
> the control method further including,
> in the computation step, computing, for each boundary value, a defect rate for each of two samples, and computing a test statistical quantity representing a difference between computed two error rates.

11. The control method according to supplementary note 10, wherein

> the factor data indicate a value of an index representing a manufacturing condition of a product, and
> the result data indicate whether the product is a defective product.

12. The control method according to any one of supplementary notes 9 to 11, wherein
the test statistical quantity information is a graph indicating combination of the boundary value and the test statistical quantity.

13. The control method according to supplementary note 12, further including,
in the generation step, including, in the graph, an indication representing a threshold value of the test statistical quantity representing a significance level.

14. The control method according to supplementary note 12 or 13, further including,
in the generation step, outputting a histogram representing a distribution of the factor data along with the graph.

15. The control method according to supplementary note 14, further including,
in the generation step,

> accepting an input of specifying a boundary value to the graph, and
> making a display aspect of data in a rank associated with each boundary value equal to or less than the specified boundary value, and a display aspect of data in a rank associated with each boundary value larger than the specified value to be different from each other in the histogram in response to acceptance of the input.

16. The control method according to any one of supplementary notes 9 to 15, wherein

the target data indicate a set of the first factor data, the second factor data, and the result data,
the control method further including,
in the computation step, computing, for each set of a plurality of first boundary values for dividing a numerical range of the first factor data into the number, and a plurality of second boundary values for dividing a numerical range of the second factor data into the number, the test statistical quantity for two samples to be acquired by dividing target data included in the target data set into two parts, based on the set of boundary values.

17. A program causing a computer to execute the control method according to any one of supplementary notes 9 to 16.

This application is based upon and claims the benefit of priority from Japanese patent application No. 2019-199613, filed on November 1, 2019, the disclosure of which is incorporated herein in its entirety by reference.

Reference signs List

| | |
|---|---|
| 10 | Target data set |
| 12 | First sample |
| 14 | Second sample |
| 20 | Target data |
| 22 | Factor data |
| 24 | Result data |
| 30 | Division number information |
| 40 | Test statistical quantity information |
| 50 | Table |
| 52 | Boundary value |
| 54 | Test statistical quantity |
| 60 | User terminal |
| 70 | Test statistical quantity graph |
| 72 | Line |
| 72 | Bar |
| 74 | Threshold indication |
| 76 | Explanatory indication |
| 80 | Screen |
| 82, 84, 86 | Input area |
| 88 | Button |
| 90 | Histogram |
| 100 | Time series graph |
| 102 | Line |
| 110 | Line |
| 130 | Screen |
| 131, 132, 133, 134, 135, 136, 137 | Display area |
| 140 | Screen |
| 141, 142, 143, 144, 145 | Display area |
| 146 | Input interface |
| 150 | Test statistical quantity graph |
| 152 | Frame |
| 1000 | Computer |
| 1020 | Bus |
| 1040 | Processor |
| 1060 | Memory |
| 1080 | Storage device |
| 1100 | Input/output interface |
| 1120 | Network interface |

| 2000 | Analyzing apparatus |
|------|---------------------|
| 2020 | Acquisition unit |
| 2040 | Computation unit |
| 2060 | Generation unit |

**Claims**

1. An analyzing apparatus comprising:

   an acquisition unit that acquires a set of target data each indicating a pair of factor data being a value relating to a factor, and result data being a value relating to a result, and division number information indicating a number for dividing a numerical range of the factor data;
   a computation unit that computes, for each of a plurality of boundary values for dividing the numerical range into the number, a test statistical quantity representing a difference relating to the result data for two samples to be acquired by dividing target data included in the set of the target data into two parts at the boundary value; and
   a generation unit that generates test statistical quantity information indicating a plurality of test statistical quantities computed for the each boundary value.

2. The analyzing apparatus according to claim 1, wherein

   the result data indicate presence or absence of a defect, and
   the computation unit computes, for each boundary value, a defect rate for each of two samples, and computes a test statistical quantity representing a difference between computed two error rates.

3. The analyzing apparatus according to claim 2, wherein

   the factor data indicate a value of an index representing a manufacturing condition of a product, and
   the result data indicate whether the product is a defective product.

4. The analyzing apparatus according to any one of claims 1 to 3, wherein
   the test statistical quantity information is a graph indicating combination of the boundary value and the test statistical quantity.

5. The analyzing apparatus according to claim 4, wherein
   the generation unit includes, in the graph, an indication representing a threshold value of the test statistical quantity representing a significance level.

6. The analyzing apparatus according to claim 4 or 5, wherein
   the generation unit outputs a histogram representing a distribution of the factor data along with the graph.

7. A control method to be executed by a computer comprising:

   an acquisition unit that acquires a set of target data each indicating a pair of factor data being a value relating to a factor, and result data being a value relating to a result, and division number information indicating a number for dividing a numerical range of the factor data;
   a computation unit that computes, for each of a plurality of boundary values for dividing the numerical range into the number, a test statistical quantity representing a difference relating to the result data for two samples to be acquired by dividing target data included in the set of the target data into two parts at the boundary value; and
   a generation unit that generates test statistical quantity information indicating a plurality of test statistical quantities computed for the each boundary value.

8. A program causing a computer to execute the control method according to claim 7.

# FIG. 1

TARGET DATA SET

| FACTOR DATA | RESULT DATA |
|---|---|

TARGET DATA

DIVISION NUMBER INFORMATION

DIVISION NUMBER =N

ANALYZING APPARATUS

COMPUTE PLURALITY OF BOUNDARY VALUES FOR DIVIDING NUMERICAL RANGE OF FACTOR DATA 22 INTO DIVISION NUMBER

COMPUTE, FOR EACH BOUNDARY VALUE, TEST STATISTICAL QUANTITY REPRESENTING DIFFERENCE RELATING TO RESULT DATA 24 FOR TWO SAMPLES TO BE ACQUIRED BY DIVIDING TARGET DATA SET 10 AT BOUNDARY VALUE

GENERATE TEST STATISTICAL QUANTITY INFORMATION 40 INDICATING PLURALITY OF COMPUTED TEST STATISTICAL QUANTITIES

BOUNDARY VALUE

# FIG. 2

# FIG. 3

2000

ANALYZING APPARATUS

ACQUISITION UNIT — 2020

COMPUTATION UNIT — 2040

GENERATION UNIT — 2060

# FIG. 4

COMPUTER                                                                    1000

                                                        INPUT/            1100
                                                        OUTPUT I/F

                            1020

                                    BUS

                                            1080

PROCESSOR      MEMORY      STORAGE           NETWORK I/F      1120
                           DEVICE

    1040        1060

# FIG. 5

TARGET
DATA SET — 10

TARGET DATA SET 10 THAT
SATISFIES CONDITION

ANALYZING APPARATUS — 2000

·SPECIFY CONDITION RELATING
 TO TARGET DATA SET 10
·SPECIFY DIVISION NUMBER

SCREEN DATA INCLUDING
TEST STATISTICAL QUANTITY
INFORMATION 40

USER TERMINAL — 60

USER

# FIG. 6

```
                        ┌─────────────┐
                        │    Start    │
                        └─────────────┘
                               │
┌──────────────────────────────────────────────────────┐
│            ACQUIRE TARGET DATA SET 10                  │─── S102
└──────────────────────────────────────────────────────┘
                               │
┌──────────────────────────────────────────────────────┐
│        ACQUIRE DIVISION NUMBER INFORMATION 30          │─── S104
└──────────────────────────────────────────────────────┘
                               │
┌──────────────────────────────────────────────────────┐
│  COMPUTE BOUNDARY VALUE FOR DIVIDING NUMERICAL RANGE   │─── S106
│  OF FACTOR DATA 22 INTO RANGE OF DIVISION NUMBER       │
└──────────────────────────────────────────────────────┘
                               │
         ╱────────────────────────────────────────╲
        ╱          LOOP PROCESSING A                ╲─── S108
        ╲     REGARDING EACH BOUNDARY VALUE i       ╱
         ╲────────────────────────────────────────╱
                               │
┌──────────────────────────────────────────────────────┐
│  GENERATE FIRST SAMPLE AND SECOND SAMPLE BY DIVIDING   │─── S110
│  TARGET DATA 20 INTO TWO PARTS AT BOUNDARY VALUE i     │
└──────────────────────────────────────────────────────┘
                               │
┌──────────────────────────────────────────────────────┐
│  COMPUTE TEST STATISTICAL QUANTITY REPRESENTING        │─── S112
│  DIFFERENCE RELATING TO RESULT DATA 24 FOR             │
│  FIRST SAMPLE AND SECOND SAMPLE                        │
└──────────────────────────────────────────────────────┘
                               │
         ╲────────────────────────────────────────╱
          ╲          LOOP PROCESSING A            ╱─── S114
           ╲────────────────────────────────────╱
                               │
┌──────────────────────────────────────────────────────┐
│  GENERATE TEST STATISTICAL QUANTITY INFORMATION 40     │─── S116
└──────────────────────────────────────────────────────┘
                               │
┌──────────────────────────────────────────────────────┐
│    OUTPUT GENERATED TEST STATISTICAL QUANTITY          │─── S118
│    INFORMATION 40                                      │
└──────────────────────────────────────────────────────┘
                               │
                        ┌─────────────┐
                        │     End     │
                        └─────────────┘
```

21

FIG. 7

50

52                              54

| BOUNDARY VALUE | TEST STATISTICAL QUANTITY |
|:---:|:---:|
| b1 | t1 |
| b2 | t2 |
| . . . | . . . |

FIG. 8

# FIG. 9

80

TEST METHOD | TEST ON DIFFERENCE IN RATIO ▽ — 82

SIGNIFICANCE LEVEL | 1% | THRESHOLD VALUE = th ▽ — 84

TEST GRANULARITY | 20 ▽ — 86

TEST — 88

70

th

TEST STATISTICAL QUANTITY

$b_1$    $b_2$    $b_3$    $b_4$    $b_5$

CONTENT OF COMPONENT A

FIG. 10

# FIG. 11

**Left panel (131):** CONTENT OF COMPONENT A vs TIME (100, 102)

**Left panel (132):** QUANTITY / DEFECT RATE vs CONTENT OF COMPONENT A (90, 110)
- min, $b_1$, $b_2$, $b_3$, $b_4$, $b_5$, max

Legend:
- NUMBER OF SAMPLES: Na — AVERAGE DEFECT RATE: Pa%
- NUMBER OF SAMPLES: Nb — AVERAGE DEFECT RATE: Pb%

**Right panel (133):**

| TEST METHOD | TEST ON DIFFERENCE IN RATIO ▽ |
| TEST GRANULARITY | 6 ▽ |

TEST

**Right panel (134):**

SIGNIFICANCE LEVEL

| 1% | THRESHOLD VALUE = th ▽ |

TEST STATISTICAL QUANTITY vs CONTENT OF COMPONENT A (70, 72, 74)
- th
- COMPONENT A:b3 — TEST STATISTICAL QUANTITY:t1 (76)
- min, $b_1$, $b_2$, $b_3$, $b_4$, $b_5$, max

**Right panel (135):**

| SIMULATION ON IMPROVEMENT | ALL PRODUCTS AS ANALYSIS TARGET | ADJUST TO $b_3$ OR LESS |
|---|---|---|
| DEFECTIVE PRODUCT | $n_1$ | $n_3$ |
| GOOD PRODUCT | $n_2$ | $n_4$ |
| DEFECT RATE | $p_1$% | $p_2$% |

(136) (137)

EP 4 053 764 A1

# FIG. 12

NUMERICAL RANGE OF FACTOR DATA 22-1

# FIG. 13

NUMERICAL RANGE OF FACTOR DATA 22-1

NUMERICAL RANGE OF FACTOR DATA 22-2

NUMERICAL RANGE OF FACTOR DATA 22-1

NUMERICAL RANGE OF FACTOR DATA 22-2

NUMERICAL RANGE OF FACTOR DATA 22-1

NUMERICAL RANGE OF FACTOR DATA 22-2

# FIG. 14

| INTERNATIONAL SEARCH REPORT | International application No. |
|---|---|
| | PCT/JP2020/040767 |

**A. CLASSIFICATION OF SUBJECT MATTER**
Int. Cl. G06Q10/06(2012.01)i, G06Q50/04(2012.01)i, G06F17/18(2006.01)i
FI: G06Q10/06 326, G06F17/18 D, G06Q50/04

According to International Patent Classification (IPC) or to both national classification and IPC

**B. FIELDS SEARCHED**

Minimum documentation searched (classification system followed by classification symbols)
Int. Cl. G06Q10/06, G06Q50/04, G06F17/18

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-36061 A (TOSHIBA CORP.) 07 March 2019, entire text, all drawings | 1-8 |
| A | JP 2009-116842 A (OMRON CORP.) 28 May 2009, entire text, all drawings | 1-8 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04.12.2020 | 15.12.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/040767

| Patent Documents referred to in the Report | Publication Date | Patent Family | Publication Date |
|---|---|---|---|
| JP 2019-36061 A | 07.03.2019 | US 2019/0050460 A1 entire text, all drawings | |
| JP 2009-116842 A | 28.05.2009 | US 2008/0219544 A1 entire text, all drawings EP 1967996 A1 CN 101414186 A | |

Form PCT/ISA/210 (patent family annex) (January 2015)

**EP 4 053 764 A1**

**Patent documents cited in the description**

- JP 2019036061 A
- JP 2019199613 A